Europäisches Patentamt

European Patent Office

Office européen des brevets

(19)

(11)  EP 1 270 673 A1

(12)  EUROPEAN PATENT APPLICATION
published in accordance with Art. 158(3) EPC

(43) Date of publication:
02.01.2003  Bulletin 2003/01

(21) Application number: 01900254.2

(22) Date of filing: 04.01.2001

(51) Int Cl.⁷: **C08L 101/00**, C08K 9/02

(86) International application number:
PCT/JP01/00011

(87) International publication number:
WO 01/051565 (19.07.2001 Gazette 2001/29)

(84) Designated Contracting States:
AT BE CH CY DE DK ES FI FR GB GR IE IT LI LU
MC NL PT SE TR

(30) Priority: 14.01.2000  JP 2000006575

(71) Applicant: Otsuka Chemical Co., Ltd.
Osaka-shi, Osaka 540-0021 (JP)

(72) Inventors:
• HAREYAMA, Yukiya
Tokushima-shi, Tokushima 771-0193 (JP)
• MORI, Hiroyoshi
Tokushima-shi, Tokushima 771-0193 (JP)

(74) Representative:
TER MEER STEINMEISTER & PARTNER GbR
Patentanwälte,
Mauerkircherstrasse 45
81679 München (DE)

(54)  **ELECTRICALLY CONDUCTIVE RESIN COMPOSITION**

(57)  An electrically conductive resin composition characterized as containing a resin and electrically conductive platy particles having a carbon layer at the surface thereof and a true specific gravity of up to 3.0.

EP 1 270 673 A1

**Description**

**TECHNICAL FIELD**

The present invention relates to an electrically conductive resin composition, and more particularly to an electrically conductive resin composition particularly suitable for use in industrial resin products, specifically, automobile coatings or automobile resin products or parts.

**BACKGROUND ART**

In general, plastics are electrically insulative and readily charged with static electricity. This is viewed to pose problems, including contamination due to deposition of dust or dirt, electrical trouble such as erroneous operation attributed to generation of electrostatic charges, and an electric shock that causes discomfort. As measures to prevent the occurrence of such problems, various techniques have been proposed, examples of which include formation of an electrically conductive layer on a plastic surface which tends to retain electrostatic charges and techniques whereby a resin is rendered electrically conductive in its entirety. Resins can be rendered electrically conductive, for example, by loading of an electrically conductive filler. Examples of conventionally-utilized electrically conductive fillers include carbon, metallic powders, metallic fibers and powders of electrically conductive metallic oxides. It is generally said that electrically conductive fillers in the form of fibrous particles impart effective electrical conductivity to resins at lower loadings than in the form of spherical particles. Because a reinforcing effect is additionally expected, the use of the former is preferred in some fields. Examples of fibrous electrically conductive fillers include metallic copper fibers, stainless steel fibers and carbon fibers.

However, metallic powders and metallic fibers, among these electrically conductive fillers, have high specific gravities although having high electrical conductivities. Accordingly, when a required amount thereof is mixed in a resin, an overall specific gravity of a resin composition is increased. Also in the case of metallic powders, powder particles must be arranged in close proximity to each other in order for them to create an electrically conducting path in a composite system. This requires higher loadings thereof and, as a result, the aforementioned trend becomes more significant. On the other hand, carbon powders and carbon fibers are desired for their low specific gravities. However, at higher loadings, they increase an overall viscosity of a resin composition. This accordingly prevents higher loadings thereof and, as a result, makes it difficult for them to impart high. electrical conductivity.

Also in the case where carbon or metallic powder is used in combination with non-conductive fibers or platelets, electrically conductive powder particles must be arranged in close contact with or proximity to each other in order for a resin composition to exhibit electrical conductivity. As a result, this requires higher loadings of carbon or metallic powder.

Although the fibrous shape (including a needle-like shape) is said to be advantageous over the spherical shape in terms of the ability to impart electrical conductivity, fibrous fillers when mixed with a resin tend to be oriented in a specific direction. Accordingly, where a resin product demands dimensional accuracy, the use of a resin composition incorporating such fibrous fillers may be restrained by reason that it shows different molding shrinkage factors in longitudinal and lateral directions. The use of sheetlike particles, e.g., mica, covered with a metal or metallic oxide appears to be also useful. However, the increased specific gravity thereof creates several problems: a weight of a resin composition itself is increased; a surface resistance of a resin composition when used as a coating is increased by a sedimentation trend of such fillers; and a resin composition is brought into a gelled state during storage because of settlement of the fillers.

**DISCLOSURE OF THE INVENTION**

It is an object of the present invention to provide an electrically conductive resin composition which exhibits excellent electrical conductivity and low anisotropy in terms of molding shrinkage factor and which prevents the occurrence of a weight increase that may result from the incorporation of an electrically conductive filler and avoids problems such as sedimentation of an electrically conductive filler in its coating use.

The inventors of the present invention have found that the incorporation in a resin composition of an electrically conductive filler having a plate form and an electrically conductive carbon layer on its surface results in obtaining an electrically conductive resin composition which exhibits excellent electrical conductivity and low anisotropy in terms of die or mold shrinkage factor, and that the utilization of an electrically conductive filler having a true specific gravity of up to 3.0 results in the reduced tendency of an electrically conductive resin composition to increase its weight due to incorporation of such a filler and suffer from sedimentation of the electrically conductive filler in its coating use.

That is, the present invention is concerned with an electrically conductive resin composition characterized as containing a resin and electrically conductive, platy particles having a carbon layer at the surface thereof and a true specific gravity of up to 3.0.

The electrically conductive filler for use in the present invention, because of its platelike form, is suitable for incorporation in thin films and thin-wall molded articles.

The electrically conductive, platy particles for use in the present invention can be obtained by depositing a carbon layer at the surface of the platy particles as by a CVD process. For example, they can be obtained by a method which involves allowing the platy particles to coexist with a hydrocarbon in a reducing atmosphere and applying heat to thermally decompose the hydrocarbon so that carbon produced via thermal decomposition is deposited at the surface of the platy particles.

The type of the platy particles is not particularly specified, so long as it does not undergo shape change, decomposition or the like when it is subjected to the aforementioned heat treatment. Preferably, such particles consist principally of inorganic components. The use of mica having the below-specified mean length and thickness is particularly preferred.

The electrically conductive, platy particles for use in the present invention are configured such that they have a mean length of 0.5 - 50 $\mu$m, preferably of 2 - 10 $\mu$m, and a mean thickness of 0.01 - 1 $\mu$m, preferably of 0.05 - 0.5 $\mu$m. If the mean length or mean thickness exceeds the above-specified respective range, incorporation thereof in a coating or resin may result in the failure to provide a smooth coating film or a smooth product surface. The reduced dimensional accuracy of a resin product may also result. On the other hand, if the mean length or mean thickness falls below the above-specified range, the increased amount of particles may be required to create an electrically conducting path. This in some cases results in the reduced strength of a resin composite in its entirety or the reduced surface properties.

In the present invention, major diameters of individual particles were measured using an image analyzer ("LUZEX III-U" manufactured by Nireco Corp.) and a mean value thereof was calculated to determine the mean length of the platy particles. Also, those particles were observed by images under an SEM. 20 particles which permitted identification of thickness within the view range were actually measured for thickness and a mean value was calculated to determine the mean thickness of the platy particles.

The amount of carbon coated at the surface of the particles is preferably 1 - 50 % by weight, based on the total weight of the particles. The carbon amount of below 1 % by weight may result in the insufficient electrically conducting performance. On the other hand, if the carbon amount exceeds 50 % by weight, a further increment thereof may become inappropriate since it does not simply lead to an effective improvement in conducting perfomance and often becomes disadvantageous in terms of cost. More preferably, the amount of coated carbon is 2 - 10 % by weight, based on the total weight of the particles.

The electrically conductive, platy particles are preferably incorporated in a resin composition in the amount of 3 - 90 % by weight and can be varied depending upon the purpose contemplated. In general, if the amount is below 3 % by weight, the resin composition in its entirety may exhibit insufficient electrical conductivity. If the amount exceeds 90 % by weight, the composition generally increases its viscosity and may reduce its processability on extruding or molding equipment and spreadability as a coating, in uses that require low electrical resistance (high electrical conductivity). Also, the desired increase in electrical conductivity commensurate with the loading of particles may not be obtained. It is more preferred that the electrically conductive platy particles are incorporated in the amount of 5 - 50 % by weight.

The type of the resin incorporating the electrically conductive particles is not particularly specified. Various resins, such as thermoplastic and thermosetting resins, can be used.

The technique used to incorporate the electrically conductive particles in the resin is suitably chosen depending upon the purpose contemplated and the property of the resin used. For example, the resin and the electrically conductive particles may be combined by preblending them and then subjecting the blend to thermal processing. Another technqiue may involve heating the resin to a molten state, adding thereto the electrically conductive particles and then achieving mixing thereof as by a roll or screw. In either technique, they can be susequently processed into a purposed end product as by injection molding.

The electrically conductive particles may be added to a resin dissolved in an organic solvent or to an aqueous emulsion of a resin. Where the compostion is used for coating purposes, e.g., as paints and pastes, it may be formulated by mixing and dispersing the electrically conductive particles in any of the aforementioned resin solutions using a mixer, disperser, sand mill, roll or the like.

In any of the preceding cases, besides the resin and the electrically conductive particles, various additives as appropriate to the end purpose or use can be further added to the composition.

**BEST MODE FOR CARRYING OUT THE INVENTION**

(Examplary measurement method 1)

An electrical conductivity $\rho$ of a powder was measured in accordance with the following method.

0.5 g of a sample was packed in a polyacetal tubular container and then pressed between upper and lower copper rods each having a diameter equal in dimension to that of the tubular container at a pressure of 100 Kg/cm$^2$. The electrical resistance R ($\Omega$) of the sample was calculated from the current and voltage values as measured between the upper and lower electrodes. The electrical conductivity $\rho$ ($\Omega \cdot$cm) was calculated from a thickness of the sample and an electrode contact area during measurement, according to the following equation:

$$\text{Electrical conductivity } \rho \ (\Omega \cdot \text{cm}) = \text{electrical}$$

$$\text{resistance R } (\Omega) \text{ x electrode contact area (cm}^2) \text{ / sample}$$

$$\text{thickness (cm)}$$

(Examplary measurement method 2)

A surface resistance of a molded product from a resin composition was measured in accordance with the following method.

A sample was prepared and measured according to JIS K 6911. Measuring equipments HIRESTA IP (for high resistance measurement: $10^4$ - $10^{12}$ $\Omega$) and LOWRESTA (for low resistance measurement: $10^{-2}$ - $10^7$ $\Omega$) were used to determine surface resistance.

(Examplary measurement method 3)

A molding shrinkage factor Vs of a molded prodcut from the resin composition was measured in accordance with the following method.

According to a DIN-16901 method, a difference between a dimension Mw of a mold cavity and a dimension Mf of the molded product after the lapse of 24 hours from molding was divided by the original dimension Mw of the mold cavity. That is, calculation was made using the following equation:

$$\text{Molding shrinkage factor Vs (\%) = (Mw - Mf) / Mw x 100}$$

In view of anisotropy during molding, a mean value of molding shrinkage factors measured along a flow direction and a cross direction of a resin while processed was given as a value for molding shrinkage factor in the following Examples and Comparative Examples.

(Examplary measurement method 4)

A surface roughness of a molded product from the resin composition was determined by measuring a mean centerline roughness ($\mu$m) accoring to a method specified in JIS B 0601. A measuring equipment SURFCOM 300B, manufactured by Tokyo Seimitsu Co., Ltd., was used to determine surface roughness.

(Preparation Example 1)

Silk mica (product of Sanshin Kogyo Co., Ltd., mean length 4 $\mu$m, mean thickness 0.03 $\mu$m, true specific gravity 2.9) was heat treated at 900 °C in a reducing atmosphere ($N_2$) with a proper amount of a toluene gas flowing thereinto. This resulted in obtaining a plate-form black product, i.e., mica having a carbon layer at its surface.

The shape and size of the treated mica were observed to be substantially identical to those of the original mica. The amount of deposited carbon was 10 % by weight. Also, a true gravity and an electrical conductivity were determined to be 2.8 and 0.3 $\Omega \cdot$cm, respectively.

(Preparation Example 2)

Mica, similar to that used in Preparation Example 1, was subjected to a wet, nickel plating treatment, so that mica was coated at its surface with metallic nickel. The shape and size of the treated mica were observed to be substantially identical to those of the original mica. The amount of deposited nickel was 50 % by weight. Also, a true gravity and an electrical conductivity were 5.7 and 0.008 $\Omega$·cm, respectively.

(Preparation Example 3)

The procedure of Preparation Example 1 was followed using titanium oxide particles (rutile type, product of Teika Co., Ltd., mean particle diameter 2 $\mu$m, true specific gravity 4.2), so that a carbon layer was depotied at the surface thereof. The shape and size of the treated particles were observed to be substantially identical to those of the original particles. The amount of the deposited carbon was 15 % by weight. Also, a true gravity and an electrical conductivity were 4.0 and 0.4 $\Omega$·cm, respectively.

(Preparation Example 4)

The procedure of Preparation Example 1 was followed using calcium silicate fibers (product of NYCO, mean length 25 $\mu$m, mean diameter 1 $\mu$m, true specific gravity 2.8), so that a carbon layer was deposited at the surface thereof. The shape and size of the treated fibers were observed to be substantially identical to those of the original fibers. The amount of deposited carbon was 5 % by weight. Also, a true gravity and an electrical conductivity were 2.7 and 0.6 $\Omega$·cm, respectively.

(Preparation Example 5)

The procedure of Preparation Example 1 was followed using white mica (product of Repco Co., mean length 60 $\mu$m, mean thickness 2 $\mu$m, true specific gravity 2.8), so that a carbon layer was deposited at the surface thereof. The shape and size of the treated mica was observed to be substantially identical to those of the original mica. The amount of deposited carbon was 12 % by weight. Also, a true gravity and an electrical conductivity were 2.7 and 0.7 $\Omega$·cm, respectively.

(Preparation Example 6)

The conductive mica prepared in Preparation Example 1 was mechnically pulverized (ball milled) into fine particles with a mean length of 0.3 $\mu$m and a mean thickness of 0.03 $\mu$m. Those particles were microspically observed as being fine but retaining a mica shape (platy form).

(Other measurement sample 1)

A sample of conductive carbon black (product of Ketchen International Co., Ltd., mean particle diameter 30 $\mu$m, true specific gravity 1.9) was used in Comparative Examples. It contained 100 % carbon. As a result of measurement using a similar method, an electrical conductivity was determined to be 0.06 $\Omega$·cm.

(Other measurement sample 2)

A sample of carbon fibers (product of Toray Industries, Inc., mean length 3 mm, mean diameter 100 $\mu$m, true specific gravity 1.9) was used in Comparative Examples. It contained 100 % carbon. As a result of measurement using a similar method, an electrical conductivity was determined to be 0.02 $\Omega$·cm.

(EXAMPLE 1)

30 % by weight of the electrically conductive platelets prepared in Preparation Example 1 were mixed with a 6,6-nylon resin (product of DuPont; product name "ZYTEL") to produce a molding.
The molding was determined to have a surface resistance of 4 x $10^3$ $\Omega$, a molding shrinkage factor of 0.3 % and a surface roughness of 0.08 $\mu$m.

(EXAMPLE 2)

The electrically conductive platelets prepared in Preparation Example 1 were added to a coating acrylic binder (product of Dai Nippon Toryo Co., Ltd., product name "ACROSE SUPER FS", solids content 40 wt.%) in the amount of 30 % by weight, based on the weight of the solids. They were mixed with stirring, coated on a PET film to provide a dry film thickness of 30 $\mu$m, and then dried.
Measurement revealed a surface resistance of 8 x $10^2$ $\Omega$.

(COMPARATIVE EXAMPLE 1)

The procedure of Example 2 was followed using the nickel-coated mica prepared in Preparation Example 1 to provide a coating film. The resulting film indicated a high level of sedimentation and exhibited a surface resistance of at least $10^{12}$ $\Omega$ due to the influence of a surface resin layer.

(COMPARATIVE EXAMPLE 2)

The electrically conductive, titanium oxide particles prepared in Preparation Example 3 were mixed with a 6,6-nylon resin in the same manner as in Example 1 to produce a molding. Measurement revealed a surface resistance of at least $10^{12}$ $\Omega$, a molding shrinkage factor of 0.7 % and a surface roughness of 0.78 $\mu$m.

(COMPARATIVE EXAMPLE 3)

The procedure of Example 2 was followed, using the electrically conductive, titanium oxide particles prepared in Preparation Example 3, to provide a coating film. Measurement revealed a surface resistance of at least $10^{12}$ $\Omega$.

(COMPARATIVE EXAMPLE 4)

The electrically conductive, calcium silicate fibers prepared in Preparation Example 4 were mixed with a 6,6-nylon resin in the same manner as in Example 1 to produce a molding. Measurement revealed a surface resistance of 8 x $10^3$ $\Omega$, a molding shrinkage factor of 0.9 % and a surface roughness of 0.11 $\mu$m.

(COMPARATIVE EXAMPLE 5)

The procedure of Example 2 was followed, using the electrically conductive, calcium silicate fibers prepared in Preparation Example 4, to form a coating film. Measurement revealed a surface resistance of 9 x $10^2$ $\Omega$.

(COMPARATIVE EXAMPLE 6)

The procedure of Example 2 was followed, using the large-size conductive mica prepared in Preparation Example 5, to form a coating film. Due to the difficulty to achieve uniform dispersion, the coating film exhibited a surface resistance of 7 x $10^8$ $\Omega$.

(COMPARATIVE EXAMPLE 7)

The procedure of Example 2 was followed, using the finely-divided conductive mica prepared in Preparation Example 6, to form a coating film. Measurement revealed a surface resistance of at least $10^{12}$ $\Omega$.

(COMPARATIVE EXAMPLE 8)

The carbon fibers perviously described as the other measurement sample 1 were mixed with a 6,6-nylon resin in the same manner as in Example 1 to produce a molding. Measurement revealed a surface resistance of 1 x $10^3$ $\Omega$, a molding shrinkage factor of 1.0 % and a surface roughness of 0.95 $\mu$m.

(COMPARATIVE EXAMPLE 9)

The attempt to provide a coating film in the same manner as in Example 2 using the carbon fibers perviously described as the other measurement sample 1 failed.

(COMPARATIVE EXAMPLE 10)

The raw mica left untreated in Preparation Example 1 and the conductive carbon black previously described as the other measurement sample 2, in the mica/carbon black weight ratio = 90/10, were mixed in the powder form. The mixed powder was mixed with a 6,6-nylon resin in the same manner as in Example 1 to produce a molding. Measurement revealed a surface resistance of 5 x $10^4$ Ω, a molding shrinkage factor of 0.3 % and a surface roughness of 0.55 μm.

The measurement results of surface resistance, molding shrinkage factor and surface roughness for each of the nylon-incoporated resin moldings obtained in Example 1 and Comparative Examples 2, 4, 8 and 10 are listed together in Table 1.

Table 1

|  | Surface Resistance(Ω) | Molding Shrinkage Factor (%) | Surface Roughness(μm) |
|---|---|---|---|
| Example 1 | $4\times10^3$ | 0.3 | 0.08 |
| Comparative Example 2 | Over $10^{12}$ | 0.7 | 0.78 |
| Comparative Example 4 | $8\times10^3$ | 0.9 | 0.11 |
| Comparative Example 8 | $1\times10^3$ | 1.0 | 0.95 |
| Comparative Example 10 | $5\times10^4$ | 0.3 | 0.55 |

The results shown in Table 1 clearly demonstrate that the resin molding of Example 1 in accordance with the present invention exhibits the reduced surface resistance, molding shrinkage factor and surface roughness. Therefore, the present invention can provide a resin molding which exhbits exellent electrical conductivity, low anisotropy in terms of molding shrinkage factor, and satisfactory surface roughness.

The surface resistance values measured for the filler-loaded coating films of Example 2 and Comparative Examples 1, 3, 5, 6, 7 and 9 are listed together in Table 2.

Table 2

|  | Surface Resistance(Ω) |
|---|---|
| Example 2 | $8\times10^2$ |
| Comparative Example 1 | Over $10^{12}$ |
| Comparative Example 3 | Over $10^{12}$ |
| Comparative Example 5 | $9\times10^2$ |
| Comparative Example 6 | $7\times10^8$ |
| Comparative Example 7 | Over $10^{12}$ |
| Comparative Example 9 | Failed to Form a Coating Film |

The results shown in Table 2 clearly demonstrate that the coating film of Example 2 in accordance with the present invention exhibits the reduced surface resistance and the improved electrical conductivity. In particular, a comparison of Example 2 using mica coated with a carbon layer to Comparative Example 1 using mica coated with metallic nickel clearly proves that the platy particles for use in the present invention, because of their reduced true gravity, are unlikely to settle out even when incorporated in a coating composition and thus can impart satisfactory electrical conductivity.

**EFFECTS OF THE INVENTION**

According to the present invention, an electrically conductive resin composition can be provided which exhibits excellent electrical conductivity and low anisotropy in terms of molding shrinkage factor and which prevents the occurrence of a weight increase that may result from the incorporation of an electrically conductive filler and avoids problems such as sedimentation of an electrically conductive filler in its coating use. Accordingly, the resin composition can be made into an industrial resin molding which has a low specific gravity, a smooth surface and an excellent level of dimensional stability. The resin composition can avoid problems such as sedimentation of an electrically conductive filler during storage and can be used for many purposes including a coating composition which provides coating films excellent in electrical conductivity.

**Claims**

1. An electrically conductive resin composition **characterized** as containing a resin and electrically conductive platy particles having a carbon layer at the surface thereof and a true specific gravity of up to 3.0.

2. The electrically conductive resin composition as recited in claim 1, **characterized in that** said platy particles are configured to have a mean length of 0.5 - 50 µm and a mean thickness of 0.01 - 1 µm.

3. The electrically conductive resin composition as recited in claim 1, **characterized in that** an amount of the coating carbon at the particle surfaces is 1 - 50 % by weight, based on the total weight of the particles.

4. The electrically conductive resin composition as recited in claim 1, **characterized in that** said electrically conductive platy particles are incorporated in the resin composition in the amount of 3 - 90 % by weight.

5. The electrically conductive resin composition as recited in claim 1, **characterized in that** said platy particle is mica.

6. The electrically conductive resin composition as recited in claim 1, **characterized in that** said platy particles are configured to have a mean length of 0.5 - 50 µm and a mean thickness of 0.01 - 1 µm, an amount of the coating carbon at the particle surfaces is 1 - 50 % by weight, based on the total weight of the particles, and the electrically conductive platy particles are incorporated in the resin composition in the amount of 3 - 90 % by weight.

## INTERNATIONAL SEARCH REPORT

International application No.

PCT/JP01/00011

| A. | CLASSIFICATION OF SUBJECT MATTER |
|---|---|

Int.Cl$^7$  C08L101/00, C08K9/02

According to International Patent Classification (IPC) or to both national classification and IPC

| B. | FIELDS SEARCHED |
|---|---|

Minimum documentation searched (classification system followed by classification symbols)

Int.Cl$^7$  C08L1/00-101/16, C08K3/00-13/08

Documentation searched other than minimum documentation to the extent that such documents are included in the fields searched

Electronic data base consulted during the international search (name of data base and, where practicable, search terms used)

WPI/L

| C. | DOCUMENTS CONSIDERED TO BE RELEVANT |
|---|---|

| Category* | Citation of document, with indication, where appropriate, of the relevant passages | Relevant to claim No. |
|---|---|---|
| X<br>Y | JP, 7-41316, A (Otsuka Chemical Co., Ltd.),<br>10 February, 1995 (10.02.95),<br>Claims; Par. No. [0010]; example  (Family: none) | 1-4,6<br>5 |
| X<br>Y | JP, 9-59428, A (Otsuka Chemical Co., Ltd.),<br>04 March, 1997 (04.03.97),<br>Claims; example  (Family: none) | 1-4,6<br>5 |
| X<br>Y | JP, 10-226759, A (Otsuka Chemical Co., Ltd.),<br>25 August, 1998 (25.08.98),<br>Claims; example  (Family: none) | 1-4,6<br>5 |
| Y | JP, 58-161205, A (Potters Industries Inc.),<br>24 September, 1983 (24.09.83),<br>Claims; example<br>& DE, 3302552, A  & GB, 2115396, A | 5 |
| Y | JP, 63-20342, A (Sanyo Shikiso K.K.),<br>28 January, 1988 (28.01.88),<br>Claims; example  (Family: none) | 5 |

☐ Further documents are listed in the continuation of Box C.　　☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 28 March, 2001 (28.03.01) | 10 April, 2001 (10.04.01) |

| Name and mailing address of the ISA/<br>　　Japanese Patent Office | Authorized officer |
|---|---|
| Facsimile No. | Telephone No. |

Form PCT/ISA/210 (second sheet) (July 1992)